# EUROPEAN PATENT SPECIFICATION

(11) **EP 3 899 269 B1**
(45) Date of publication and mention of the grant of the patent: **11.03.2026**
(21) Application number: 20702214.6
(22) Date of filing: 13.01.2020
(51) Int. Cl.: F03D 80/80, F03D 13/20, F03D 13/10

(54) **WIND TURBINE AND METHOD FOR ASSEMBLING A WIND TURBINE TOWER**
WINDTURBINE UND VERFAHREN ZUR MONTAGE EINES WINDTURBINENTURMS
ÉOLIENNE ET PROCÉDÉ D'ASSEMBLAGE D'UNE TOUR DE TURBINE ÉOLIENNE

(30) Priority: 31.01.2019 EP 19154794
(43) Date of publication of application: 27.10.2021
(73) Proprietor: Siemens Gamesa Renewable Energy A/S, 7330 Brande (DK)
(72) Inventor: SMEDEGAARD, Thomas, 8230 Åbyhøj (DK); BLAABJERG, Hans Kjaer, 8751 Gevded (DK); KUMAR, Vikas, Jansath 251 314 (IN); RUMLER, Malte Herbert, 49497 Mettingen (DE); TIWARI, Madhup, Bangalore 560 100 (IN); UPPAL, Naveen, New Delhi 110 018 (IN)
(74) Representative: SGRE-Association
(86) International application number: PCT/EP2020/050704
(87) International publication number: WO 2020/156792

(56) References cited:
- EP-A1- 1 514 636
- WO-A2-2012/152287
- US-A1- 2010 139 180
- US-A1- 2015 292 263
- US-B2- 10 100 525

## Description

The present invention relates to a wind turbine, comprising a tower and at least one platform mounted inside the tower. Additionally, the present invention relates to a method for assembling a wind turbine tower.

Wind turbine towers normally include working areas within the tower to allow access for personnel for servicing purposes and/or for installing equipment. Platforms that provide support for personnel or equipment cover the entire cross-section of a wind turbine tower. Cut-outs are provided for a lift passage and a climbing ladder passage. The cut-out for the lift passage is typically surrounded by walls that can comprise a door to access the lift. The cut-out for the climbing ladder is typically covered with self-closing hatches. Document US10100525 B2 discloses a prior art example of a wind turbine and a method of assembling a wind turbine.

Such platforms are typically realized by implementing a vertical support structure, e.g. beams that stretch horizontally across the tower or a tower segment. On top of these support structures a horizontal shielding, e.g. metal sheets or plates, are placed to provide the platform. This overall platform can hang from a higher support structure, e.g. a support at a higher position on the inside wall of the tower. While the previously discussed platform design is easy to implement and relatively light when used in wind turbines that have a relatively small inner diameter, it is often desirable to build wind turbines with a relatively large tower diameter. In this case, a relatively strong support structure is required and the overall material requirement for such a platform is rather large. This leads to an increased cost for implementing the wind turbine.

The object of the present invention is therefore to provide a more efficient and cost-effective support structure for personnel and/or equipment within the tower of a wind turbine.

The problem is solved by a wind turbine, according to claim 1, comprising a tower and at least one platform mounted inside the tower, wherein the platform only partially covers an inner area of the tower by forming a ledge along the inner wall of the tower surrounding an inner opening or by only covering a segment of the circle defined by the inner wall therefore forming an adjacent opening formed as a further segment of that circle.

For example, the platform used in the wind turbine according to the present invention can be of the shape of a doughnut or a half circle. It was recognized, that reducing the area of the platform will not only save material in terms of the horizontal shielding, e.g. the metal plates or sheets used for providing the platform itself. It is also possible to not use any support structure in the area of the inner or adjacent opening and therefore further reduce the material requirement for the platform. Additionally, the leftover support structure can be made less robust, since it needs to carry less overall weight. This leads to another reduction in the required amount of material. This is especially true for large tower diameters since material placed at a large distance from the tower wall will put a load on the support structure with a long lever arm.

The other components of the wind turbine can be implemented as it is well-known in the prior art. E.g. a nacelle can be rotatably mounted on top of the tower of the wind turbine and the nacelle can carry a generator driven by a hub that carries the rotor blades.

The platform can generally be an open surface that can be used for personnel to walk on and/or to service the wind turbine. Some space on the platform can also be used to provide storage space for equipment used in the wind turbine, e.g. switching gear. The platform can be at least 1.5 m wide, especially when forming a ledge along the inner wall. This width is typically sufficient to allow personnel to operate.

The platform can surround at least one further opening that provides a passage for a lift or a climbing ladder. Especially one opening for a lift and one opening for a climbing ladder can be provided. The opening for the climbing ladder can be equipped with a hatch that can especially be self-closing. The opening for the lift can be surrounded with a wall that can comprise a door for entering and leaving the lift.

The inner or adjacent opening can not have a ladder or lift installed therein and can not be surrounded by a solid wall. While it is advantageous to provide some kind of railing as discussed below, the installation of lifts and ladders and respective walls or hatches in the area of the inner or adjacent opening would add additional weight to the platform and therefore at least partially negate the previously discussed advantages.

The platform can comprise a support structure formed by support beams on the bottom of the platform, wherein the support beams do not extend into the inner opening or the adjacent opening. The support beams can form a vertical support. The support beams can be formed by bent sheet metal. The support beams can carry plates or metal sheets that form the platform. A simple and robust structure of the platform can be provided by using support beams that run into orthogonal directions. Avoiding the use of support beams in the area of the inner or adjacent opening can further reduce the amount of material required for the platform.

According to the invention spacers are mounted on top of the platform, wherein an adjustable spacer element of the spacer supports the spacer and therefore the platform against the inner wall of the tower. Such a spacer can also be called machine shoe spacer. The use of spacers that support a platform against the inner wall of a tower and that are arranged below the platform is known in the prior art. These spaces can be used to ensure that the platform stays in a horizontal position when e.g. applying uneven loads to a platform suspended from a carrying structure. It was recognized that by placing these spacers on top of the platform they are easier to adjust, therefore allowing for an easier installation of the platform in the wind turbine and easier servicing. The base of the respective spacer is fixed to the platform, especially to one of the support beams. By attaching an element to be pushed against the tower wall to a threaded rod and using one or more nuts to adjust the position of this rod with respect to the spacer body an easy adjustment of the spacer is possible.

A railing and/or a kick plate can be installed at the edge of the platform bordering the inner or adjacent opening. The kick plate can be a low wall or a low strip of metal, e.g. with a height that is larger than 3 cm or 5 cm or 10 cm and/or that is lower than 15 cm, 20 cm or 30 cm. This wall or strip of metal can be installed at an angle to the platform, e.g. at an angle of approximately 90°, e.g. between 85° and 95°. Such a kick plate can be used to stop items from rolling or gliding off the platform and can help the personnel to avoid placing a foot partially beyond the platform. The combination of a kick plate and a railing will provide for a degree of security that is similar to the installation of a wall while saving weight. The kick plate and/or railing can be permanently installed or can only be installed when e.g. a servicing of the wind turbine is required and therefore when personnel tends to move in the area of the opening.

A fabric mesh or mat can be attached to the platform covering the inner or adjacent opening. This can e.g. be achieved by attaching hooks to the previously discussed kick plate or to the lower part of a railing. The mesh or mat can then be attached to the hook via a hook and eye connection. The eye can e.g. be formed by using a hollow rivet. The use of a fabric mesh or mat ensures that small items that are accidently dropped into the opening are caught and it does not add a large weight to the platform.

The inner opening can be formed as an octagon or the platform can be formed as a semi-circle. As previously discussed, the support beams can advantageously run at an angle of 90°. Aligning the opening completely with the support beams would therefore lead to a rectangular opening. Since the inner circumference of the tower is typically round, this would lead to a strong variation in the width of the platform. Using an octagon shape for the opening still allows for the shape of the opening to be well matched to the support structure of the platform while providing a roughly constant width of the platform. When using an adjacent opening, a semi-circular form tends to provide the best compromise between minimizing the platform size and ensuring that each point of the platform can be supported by support points placed on opposite sides of the platform.

The platform can be connected to the tower by multiple support elements that are arranged along the edge of the platform bordering the inner wall of the tower, wherein the support elements are attached to a support structure above the platform. The attachment to the support structure can be at least 20 cm or 30 cm or 50 cm, especially at least one meter, above the platform. This allows for an easy installation of the platform.

Besides the wind turbine the invention concerns a method for assembling a wind turbine tower, according to claim 8, especially a wind turbine tower according to the present invention, wherein at least two tower segments are stacked vertically on top of each other, wherein at least one tower segment is used that comprises a platform that is only partially covering an inner area of the tower segment by forming a ledge along an inner wall of the tower segment surrounding an inner opening or by covering a segment of the circle defined by the inner wall thereby forming an adjacent opening formed as a further segment of that circle.

The platform can be preinstalled to the individual tower segments before stacking the tower segments to build up a tower. This reduces the amount of necessary on-site installations. When using this method for assembling a wind turbine tower the proposed use of platforms that only partially cover an inner area of the tower segment and the resulting weight reduction provides the further advantage that the weight of tower segments during transport is reduced.

In the case wherein the platform is only covering a segment of the circle defined by the inner wall, at least one section of an edge of the platform bordering the adjacent opening can be movably supported, especially by a roller, by a support element attached to the inner wall during at least part of the assembly of the wind turbine. The roller can be replaced after the stacking of the tower segments by a spacer that supports the platform against the inner wall. It was recognized that platforms that only cover a segment of the circle defined by the inner wall should be supported by an additional support when the respective tower segment is laying horizontally during transportation or at a certain point during the construction of the wind turbine tower to avoid a falling of the platform. It is advantageous to provide this additional support by the support element attached to the inner wall, e.g. by side brackets, since no additional components need to be fixed to the tower segment during the transport and the assembling of the wind turbine. It was however recognized, that tower segments or the full tower can deform and ovalize when placed in the horizontal orientation. When the tower is vertically erected the ovalized form turns back into a round form. If the platform would be fixed to the support element with a fixed connection this would put additional stress and strain on the platform during the assembly of the wind turbine, potentially damaging the platform. It is therefore advantageous to use a movable support, especially a roller.

Once the tower is in the vertical position, the additional support for the platform is no longer required and the rollers can be removed and e.g. be replaced by spacers.

The above and other aspects, features and other advantages of the present invention will be more clearly understood from the following detailed description taken in conjunction with the accompanying drawings which schematically show:
- Fig. 1 to 4: Different views and details of a first embodiment of a wind turbine according to the present invention,
- Fig. 5: a detailed view of a second embodiment of a wind turbine according to the present invention, and
- Fig. 6: a section of the tower of the wind turbine shown in fig. 5 during the assembly of the wind turbine.

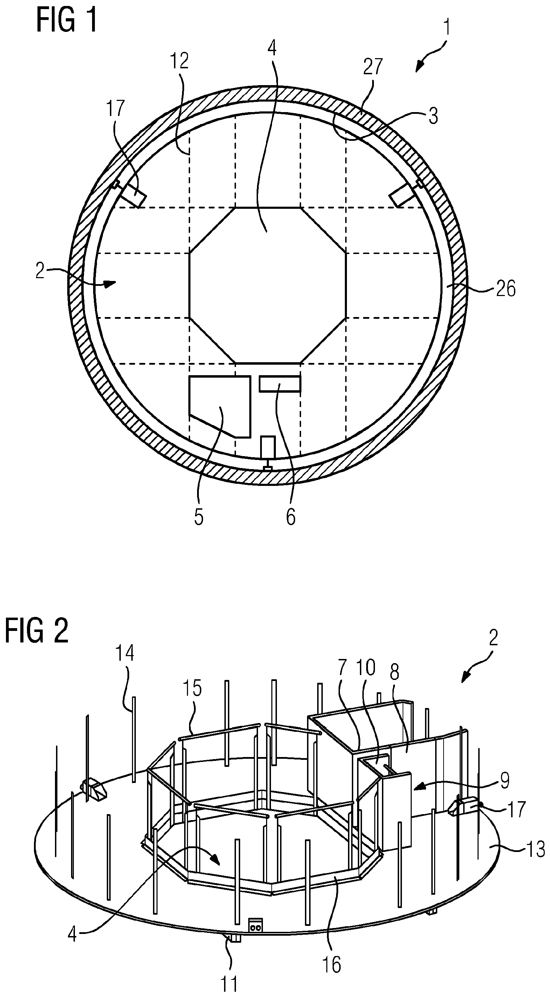

Fig. 1 shows a cut through the tower 27 of a wind turbine 1 that shows a platform 2 mounted inside the tower 27. To reduce the weight of the platform 2 and therefore the amount of material required to provide the platform 2, the platform 2 only partially covers an inner area 26 of the tower 27. The platform 2 is provided in the shape of a ledge that runs along an inner wall 3 of the tower 27 surrounding an inner opening 4. The platform is therefore doughnut-shaped. Further details of the platform 2 will be described with reference to fig. 2 that shows a perspective view of the platform 2. The platform 2 comprises a supporting structure formed by support beams 11 and plates 13 or sheets of metal or another robust material supported by this support structure. The arrangement of the support beams 11 is schematically shown in fig. 1 by the dashed lines 12. As seen in fig. 1, the support beams 11 and therefore the dashed lines 12 run in orthogonal directions to provide a stable support for the platform 2.

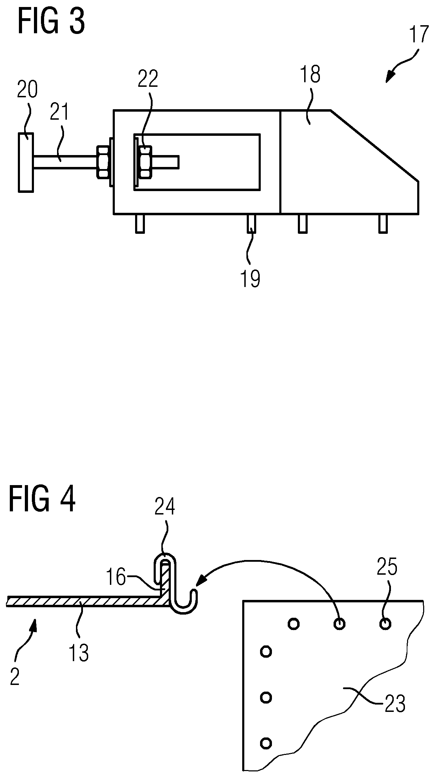

The platform 2 is attached to the tower 27 by several support elements 14 in the form of a respective lath extending vertically upward from the platform 2. This allows for an easy mounting of the platform 2 within the tower without needing access from the bottom of the platform. To avoid a tilting of the platform while the platform is asymmetrically loaded, the platform 2 is supported against the inner wall 3 by spacers 17, especially machine shoe spacers. The configuration of the spacers 17 is shown in more detail in fig. 3. The spacer 17 comprises a spacer housing 18 with pins 19 that extend vertically through the platform 2 to attach the spacer 17 to the platform 2 and especially to one of the support beams 11. At least one, preferably two, adjustable spacer elements 20 are mounted to the housing 18 to support the housing 18 and therefore the whole spacer 17 and the platform 2 against the inner wall 3 of the tower 27. The adjustable support element 20 can be adjusted by using the combination of the nuts 22 and the threaded bar 21. The adjustment can easily be achieved from the top side of the platform 2, since the spacer 17 is mounted to the top side of the platform 2.

The inner opening 4 is formed as an octagon. This shape aligns well with the arrangement of the support beams 11 and at the same time allows a roughly equal width of the ledge formed by the platform 2. The width of the ledge can be at least 1.5 m. The platform can comprise further openings 5, 6. The opening 5 provides the passage for a lift and the opening 6 the passage for a climbing ladder. As shown in fig. 2 the opening 6 for the climbing ladder 9 can be closed by a hatch 10 that can especially automatically close when the ladder 9 is retracted. The opening 5 for the lift can be surrounded by walls 7 that can comprise a door 8 to access the lift.

The opening 4 should not be closed by latches or be completely closed off by walls, since these components would add a lot of additional weight to the central area of the platform and therefore also require stronger support structures. Instead, a combination of a railing 15 and a kick plate 16 is used. The railing 15 provides safe operating conditions for the personnel and the kick plate 16 helps to avoid small items rolling or sliding off the platform 13. To further ensure that no items can drop down the opening 4 a fabric mesh or mat 23, which is schematically shown in fig. 4, can be attached to the platform 2 to cover the opening 4. As shown in fig. 4 the mat 23 can be attached to the platform 2 by using hooks 24 attached to the kick plate 16 that get hooked into an eye 25 of the fabric mat 23. The eye 25 can e.g. be installed by inserting hollow rivets into the fabric mat 23.

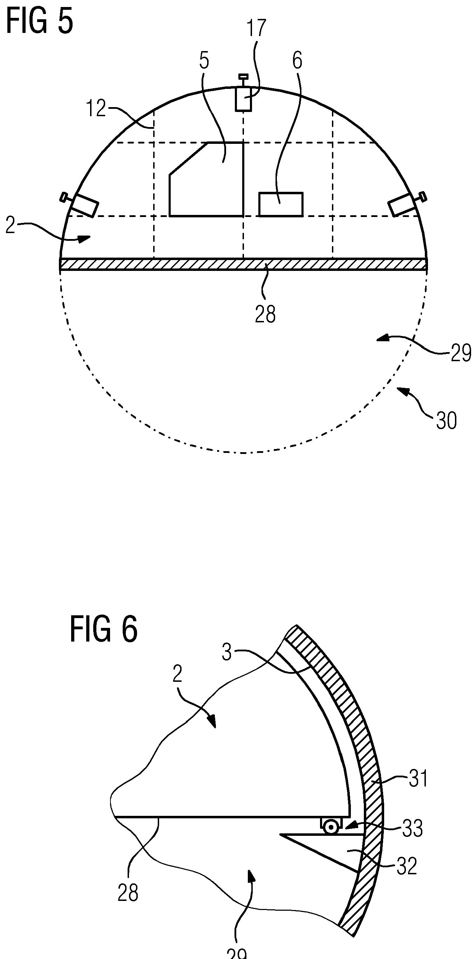

An alternate embodiment of a platform 2 that only partially covers the inner area 26 of the tower 27 is shown in fig. 5. In this example the platform 2 only covers a segment of the circle 30 defined by the inner wall 3 of the tower 27 thereby forming an adjacent opening 29 formed as a further segment of the circle 30. The platform 2 is shaped as a semi-circle. At the edge 28 of the platform 2 bordering the adjacent opening 29 a kick plate and a railing can be installed as discussed with reference to fig. 2.

Especially when using a platform 2 that only covers a segment of the circle 30 formed by the inner wall 3 of the tower 27 special care needs to be taken during the assembly process of the wind turbine. The platform 2 can be preinstalled in a tower segment, especially an upper tower segment, that is then vertically stacked with other tower segments to form the tower. To ensure that the platform 2 does not fall when the tower segment 31 is transported or stored while lying horizontally, an additional support element 32 that is attached to the inner wall 3 of the tower segment 31 is used as shown in the detailed view in fig. 6. Since the tower segment 31 can slightly deform when shifted between a horizontal and a vertical position a fixed connection between the platform 2 and these support elements 32 would put additional stress and strain on the platform therefore requiring a more robust configuration of the platform and therefore potentially an increase of weight of the platform. It is therefore advantageous to ensure that the platform 2 is movable with respect to the support element 32, e.g. by coupling these two elements by a roller 33 as shown in fig, 6.

Since this additional support is no longer required once the tower segment 31 is in its final position forming the section of the tower 27, the roller 33 can be removed at this point. This further reduces the weight of the platform 2. Additionally, a coupling element previously used to connect the roller 33 can then e.g. be used to attach one of the spacers 17.

Although the present invention has been described in detail with reference to the preferred embodiment, the present invention is not limited by the disclosed examples from which the skilled person is able to derive other variations without departing from the scope of the invention.

## Claims

1. Wind turbine, comprising a tower (27) and at least one platform (2) mounted inside the tower (27), wherein the platform (2) only partially covers an inner area (26) of the tower (27) by forming a ledge along the inner wall (3) of the tower surrounding an inner opening (4) or by only covering a segment of the circle (30) defined by the inner wall (3) thereby forming an adjacent opening (29) formed as a further segment of that circle (30), wherein spacers (17) are mounted on top of the platform (2), wherein an adjustable spacer element (20) of each spacer (17) supports the spacer (17) and therefore the platform (2) against the inner wall (3) of the tower (27), wherein a base (18) of the respective spacer (17) is fixed to the platform (2), wherein the adjustable spacer element (20) that is pushed against the inner wall (3) of the tower (27) is attached to a threaded rod (21) and one or more nuts (22) allow to adjust the position of this rod (21) with respect to the base (18) to adjust the spacer (17).

2. Wind turbine according to claim 1, **characterized in that** the platform (2) surrounds at least one further opening (5, 6) that provides a passage for a lift or a climbing ladder (9).

3. Wind turbine according to claim 1 or 2, **characterized in that** the platform (2) comprises a support structure formed by support beams (11) at the bottom of the platform (2), wherein the support beams (11) do not extend into the inner opening (4) or the adjacent opening (29).

4. Wind turbine according to one of the preceding claims, **characterized in that** a railing (15) and/or a kick plate (16) is installed at the edge of the platform (2) bordering the inner or adjacent opening (4, 29).

5. Wind turbine according to one of the preceding claims, **characterized in that** a fabric mash or mat (23) is attached to the platform (2) covering the inner or adjacent opening (4, 29).

6. Wind turbine according to one of the preceding claims, **characterized in that** the inner opening (4) is formed as an octagon or that the platform (2) is formed as a semi-circle.

7. Wind turbine according to one of the preceding claims **characterized in that** the platform (2) is connected to the tower (27) by multiple support elements (14) that are arranged along the edge of the platform (2) bordering the inner wall (3) of the tower (27), wherein the support elements (14) are attached to a support structure above the platform (2).

8. Method for assembling a wind turbine tower (27), especially a wind turbine tower (27) according to one of the preceding claims, wherein at least two tower segments (31) are stacked vertically on top of each other, wherein at least one tower segment (31) is used that comprises a platform (2) that is only partially covering an inner area (26) of the tower segment (31) by forming a ledge along an inner wall (3) of the tower segment (31) surrounding an inner opening (4) or by only covering a segment of the circle (30) defined by the inner wall (3) thereby forming an adjacent opening (29) formed as a further segment of that circle (30), wherein spacers (17) are mounted on top of the platform (2), wherein an adjustable spacer element (20) of each spacer (17) supports the spacer (17) and therefore the platform (2) against the inner wall (3) of the tower (27), wherein a base (18) of the respective spacer (17) is fixed to the platform (2), wherein the adjustable spacer element (20) that is pushed against the inner wall (3) of the tower (27) is attached to a threaded rod (21) and one or more nuts (22) allow to adjust the position of this rod (21) with respect to the base (18) to adjust the spacer (17).

9. Method according to claim 8, wherein the platform is only covering a segment of the circle (30) defined by the inner wall (3), wherein at least one section of an edge of the platform (28) bordering the adjacent opening (29) is movably supported, especially by a roller (33), by a support element (32) attached to the inner wall (3) during at least part of the assembly of the wind turbine.

## Patentansprüche

1. Windturbine, umfassend einen Turm (27) und mindestens eine Plattform (2), die innerhalb des Turmes (27) montiert ist, wobei die Plattform (2) durch Bilden einer Kante entlang der Innenwand (3) des Turmes, die eine Innenöffnung (4) umgibt, oder durch nur Abdecken eines Segments des Kreises (30), der durch die Innenwand (3) definiert ist, einen Innenbereich (26) des Turmes (27) nur teilweise abdeckt und dadurch eine benachbarte Öffnung (29) bildet, die als ein weiteres Segment jenes Kreises (30) gebildet ist, wobei Abstandshalter (17) oben auf der Plattform (2) montiert sind, wobei ein einstellbares Abstandselement (20) jedes Abstandshalters (17) den Abstandshalter (17) und daher die Plattform (2) gegen die Innenwand (3) des Turmes (27) abstützt, wobei eine Basis (18) des jeweiligen Abstandshalters (17) an der Plattform (2) fixiert ist, wobei das einstellbare Abstandselement (20), das gegen die Innenwand (3) des Turmes (27) gedrückt wird, an einer Gewindestange (21) befestigt ist und eine oder mehrere Muttern (22) es ermöglichen, die Position dieser Stange (21) in Bezug auf die Basis (18) einzustellen, um den Abstandshalter (17) einzustellen.

2. Windturbine nach Anspruch 1, **dadurch gekennzeichnet, dass** die Plattform (2) mindestens eine weitere Öffnung (5, 6) umgibt, die einen Durchlass für einen Aufzug oder eine Kletterleiter (9) bereitstellt.

3. Windturbine nach Anspruch 1 oder 2, **dadurch gekennzeichnet, dass** die Plattform (2) eine Stützstruktur umfasst, die durch Stützbalken (11) unten an der Plattform (2) gebildet ist, wobei sich die Stützbalken (11) nicht in die Innenöffnung (4) oder die benachbarte Öffnung (29) erstrecken.

4. Windturbine nach einem der vorhergehenden Ansprüche, **dadurch gekennzeichnet, dass** ein Geländer (15) und/oder eine Trittplatte (16) an dem Rand der Plattform (2), der an die Innen- oder die benachbarte Öffnung (4, 29) angrenzt, installiert ist.

5. Windturbine nach einem der vorhergehenden Ansprüche, **dadurch gekennzeichnet, dass** eine Gewebemasche oder -matte (23), welche die Innen- oder die benachbarte Öffnung (4, 29) abdeckt, an der Plattform (2) befestigt ist.

6. Windturbine nach einem der vorhergehenden Ansprüche, **dadurch gekennzeichnet, dass** die Innenöffnung (4) als ein Achteck gebildet ist oder dass die Plattform (2) als ein Halbkreis gebildet ist.

7. Windturbine nach einem der vorhergehenden Ansprüche, **dadurch gekennzeichnet, dass** die Plattform (2) durch mehrere Stützelemente (14) mit dem Turm (27) verbunden ist, die entlang des Randes der Plattform (2) angeordnet sind, der an die Innenwand (3) des Turmes (27) angrenzt, wobei die Stützelemente (14) an einer Stützstruktur über der Plattform (2) befestigt sind.

8. Verfahren zum Zusammenbauen eines Windturbinenturmes (27), insbesondere eines Windturbinenturms (27) nach einem der vorhergehenden Ansprüche, wobei mindestens zwei Turmsegmente (31) vertikal aufeinander gestapelt sind, wobei mindestens ein Turmsegment (31) verwendet wird, das eine Plattform (2) umfasst, die durch Bilden einer Kante entlang einer Innenwand (3) des Turmsegments (31), die eine Innenöffnung (4) umgibt, oder durch nur Abdecken eines Segments des Kreises (30), der durch die Innenwand (3) definiert ist, einen Innenbereich (26) des Turmsegments (31) nur teilweise abdeckt und dadurch eine benachbarte Öffnung (29) bildet, die als ein weiteres Segment jenes Kreises (30) gebildet ist, wobei Abstandshalter (17) oben auf der Plattform (2) montiert sind, wobei ein einstellbares Abstandselement (20) jedes Abstandshalters (17) den Abstandshalter (17) und daher die Plattform (2) gegen die Innenwand (3) des Turmes (27) abstützt, wobei eine Basis (18) des jeweiligen Abstandshalters (17) an der Plattform (2) fixiert ist, wobei das einstellbare Abstandselement (20), das gegen die Innenwand (3) des Turmes (27) gedrückt wird, an einer Gewindestange (21) befestigt ist und eine oder mehrere Muttern (22) es ermöglichen, die Position dieser Stange (21) in Bezug auf die Basis (18) einzustellen, um den Abstandshalter (17) einzustellen.

9. Verfahren nach Anspruch 8, wobei die Plattform nur ein Segment des Kreises (30), der durch die Innenwand (3) definiert ist, abdeckt, wobei mindestens ein Abschnitt eines Randes der Plattform (28), der an die benachbarte Öffnung (29) angrenzt, während mindestens eines Teiles des Zusammenbaus der Windturbine durch ein Stützelement (32), das an der Innenwand (3) befestigt ist, bewegbar, insbesondere durch eine Rolle (33), gestützt wird.

## Revendications

1. Éolienne comprenant une tour (27) et au moins une plateforme (2) montée à l'intérieur de la tour (27), dans laquelle la plateforme (2) ne couvre que partiellement la zone intérieure (26) de la tour (27), soit en formant un rebord le long de la paroi intérieure (3) de la tour, entourant une ouverture intérieure (4), soit en ne couvrant qu'un segment du cercle (30) défini par la paroi intérieure (3), formant ainsi une ouverture adjacente (29) qui constitue un autre segment de ce cercle (30), dans laquelle des entretoises (17) sont montées sur le dessus de la plateforme (2), dans laquelle un élément d'entretoise réglable (20) de chaque entretoise (17) supporte l'entretoise (17) et donc la plateforme (2) contre la paroi intérieure (3) de la tour (27), dans laquelle une base (18) de l'entretoise respective (17) est fixée à la plateforme (2), dans laquelle l'élément d'entretoise réglable (20) qui est poussé contre la paroi intérieure (3) de la tour (27) est fixé à une tige filetée (21) et un ou plusieurs écrous (22) permettent d'ajuster la position de cette tige (21) par rapport à la base (18) pour ajuster l'entretoise (17).

2. Éolienne selon la revendication 1, **caractérisée en ce que** la plateforme (2) entoure au moins une autre ouverture (5, 6) qui fournit un passage pour un ascenseur ou une échelle d'accès (9).

3. Éolienne selon la revendication 1 ou 2, **caractérisée en ce que** la plateforme (2) comprend une structure de support formée par des poutres de support (11) au bas de la plateforme (2), dans laquelle les poutres de support (11) ne s'étendent pas dans l'ouverture intérieure (4) ou l'ouverture adjacente (29).

4. Éolienne selon l'une quelconque des revendications précédentes, **caractérisée en ce qu'**une rambarde (15) et/ou une plaque de protection (16) sont installées au bord de la plateforme (2) bordant l'ouverture intérieure ou adjacente (4, 29).

5. Éolienne selon l'une quelconque des revendications précédentes, **caractérisée en ce qu'**un tissu en maille ou un tapis (23) est fixé à la plateforme (2) recouvrant l'ouverture intérieure ou adjacente (4, 29).

6. Éolienne selon l'une quelconque des revendications précédentes, **caractérisée en ce que** l'ouverture intérieure (4) est formée d'un octogone ou que la plateforme (2) est formée d'un demi-cercle.

7. Éolienne selon l'une quelconque des revendications précédentes, **caractérisée en ce que** la plateforme (2) est reliée à la tour (27) par de multiples éléments de support (14) disposés le long du bord de la plateforme (2) bordant la paroi intérieure (3) de la tour (27), les éléments de support (14) étant fixés à une structure de support au-dessus de la plateforme (2).

8. Procédé d'assemblage d'une tour d'éolienne (27), notamment d'une tour d'éolienne (27) selon l'une des revendications précédentes, dans lequel au moins deux segments de tour (31) sont empilés verticalement l'un sur l'autre, dans lequel au moins un segment de tour (31) est utilisé qui comprend une plateforme (2) ne recouvrant que partiellement une zone intérieure (26) du segment de tour (31), soit en formant un rebord le long d'une paroi intérieure (3) du segment de tour (31) entourant une ouverture intérieure (4), soit en ne recouvrant qu'un segment du cercle (30) défini par la paroi intérieure (3), formant ainsi une ouverture adjacente (29) qui constitue un autre segment de ce cercle (30), dans lequel des entretoises (17) sont montées sur la plateforme (2), dans lequel un élément d'entretoise réglable (20) de chaque entretoise (17) supporte l'entretoise (17) et donc la plateforme (2) contre la paroi intérieure (3) de la tour (27), dans lequel une base (18) de l'entretoise (17) respective est fixée à la plateforme (2), dans lequel l'élément d'espacement réglable (20) qui est poussé contre la paroi intérieure (3) de la tour (27) est fixé à une tige filetée (21) et un ou plusieurs écrous (22) permettent de régler la position de cette tige (21) par rapport à la base (18) pour ajuster l'espaceur (17).

9. Procédé selon la revendication 8, dans lequel la plateforme ne couvre qu'un segment du cercle (30) défini par la paroi intérieure (3), dans lequel au moins une section d'un bord de la plateforme (28) bordant l'ouverture adjacente (29) est supportée de manière mobile, notamment par un rouleau (33), par un élément de support (32) fixé à la paroi intérieure (3) pendant au moins une partie de l'assemblage de l'éolienne.
